(19) Europäisches Patentamt
European Patent Office
Office européen des brevets

(11) Publication number: **0 054 268 B2**

(12) **NEW EUROPEAN PATENT SPECIFICATION**

(45) Date of publication of the new patent specification: **02.12.87**

(51) Int. Cl.[4]: **C 08 J 5/18**, C 08 L 23/02, C 08 K 5/17

(21) Application number: **81110327.4**

(22) Date of filing: **10.12.81**

# (54) Process and composition for extrusion of Ziegler-Natta catalyzed olefin polymers.

(30) Priority: **11.12.80 US 215165**

(43) Date of publication of application:
**23.06.82 Bulletin 82/25**

(45) Publication of the grant of the patent:
**09.01.85 Bulletin 85/02**

(45) Mention of the opposition decision:
**02.12.87 Bulletin 87/49**

(84) Designated contracting states:
**AT BE CH DE FR GB IT LI LU NL SE**

(56) References cited:
**EP-B- 0 009 817**
**FR-A- 1 410 555**
**GB-A- 991 584**
**GB-A- 1 297 802**
**GB-A- 1 447 710**
**US-A- 3 553 158**
**US-A- 3 773 743**
**Central Patents Index Basic Abstracts Journal Section A: Plastol, Week A06, Sapril 78, Abstract 11608A/06, Week A18, 28 June 78, Abstract 32996A/18, Derwent Publications Limited.**

(73) Proprietor: **UNION CARBIDE CORPORATION**
**39 Old Ridgebury Road**
**Danbury Connecticut 06817 (US)**

(72) Inventor: **Allen, Corwin Michael**
**194 Old Forge Road**
**Millington, 07946 N.J. (US)**
Inventor: **Norris, Foster George**
**250-0 Turkey Hill Road**
**Bloomsbury New Jersey 08804 (US)**

(74) Representative: **Barz, Peter, Dr. et al**
**Patentanwälte Dr. V. Schmied-Kowarzik Dipl.-Ing. G. Dannenberg Dr. P. Weinhold Dr. D. Gudel Dipl.-Ing. S. Schubert Dr. P. Barz Siegfriedstrasse 8**
**D-8000 München 40 (DE)**

**EP 0 054 268 B2**

**Description**

This invention relates to anti-gel compounds useful for reducing optical degradation phenomena in extruded polyolefin film. The compounds also are useful for preventing corrosion during high temperature processing of polyolefin film.

Polyolefin resins such as polyethylene have been used for a number of years for the preparation of films by extrusion processes. Unlike high pressure, free radical polymerized polyethylenes, low pressure, low density polyethylenes prepared in the presence of Ziegler-Natta catalysts commonly develop gel-like defects when extruded, e. g., when extruded as blown films. In a blown film process, polyethylene pellets or granules are melted and extruded from an annular die to form a film envelope. In the extruder and die system, there are typically « dead spots » or « hangup areas » where molten polyethylene does not move rapidly, resulting in long heat histories for portions of the melt. As portions of the polymer are flushed from these hangup areas, they cause optical degradation phenomena in the film, known as « pinstriping » and « gel streaking ».

By « pinstriping » is meant haze bands resulting from accumulations of micro-gels which are aligned in the machine direction during the film forming process. By « gel-streaking » is meant surface roughness in the form of the inclusion, either singularly or in rows, of « v-shaped » gels (« arrowheads » or « chevrons »), streaks of soft gels, or, in extreme cases, film texture completely permeated by soft gels. Such optical degradation phenomena not only detract from film optical and mechanical strength properties, but also can cause severe problems with respect to maintaining bubble geometry during the film forming process.

Because of the fact that the extrusion processes usually involve the use of relatively high extrusion temperatures and prolonged extrusion times, in commercial practice, various anti-oxidants, such as hindered phenolics, are admixed with the polyolefin resin, to prevent undesirable degradation of the polymer during the preparation of the film. When such anti-oxidants are used, however, with the film forming grades of polyolefins in certain types of extrusion equipment, the anti-oxidants appear to pronounce, if not create, gel-streaking and pinstriping in the products thus formed.

Many solutions have been proposed to eliminate gel-streaking and pinstriping. For example, it is known to physically remove the catalyst residue, prior to extrusion, by leaching the reaction product of polymer and catalyst with alcohols, aqueous acid, water, or treating the polymer and catalyst with propylene oxide followed by an alcohol or water wash and the like. Such treatments usually produce white polymers initially, but a yellow or tan color returns when the polymers are subjected to molding and/or heating operations. In order to avoid this undesirable color formation, it is usually necessary to use a second or even a third clean-up procedure requiring the use of large quantities of deactivating materials. Another practice in the art involves drying the after-treated polymer prior to fabrication. Because they usually must be repeated several times in order to obtain a polymer having acceptable color upon exposure to heat, such clean-up procedures are both expensive and time consuming. Illustrative of such prior art treatments are those disclosed in U.S. patents 3 925 341 ; 3 962 199 ; 3 247 351 ; 4 029 877 ; 4 117 219 ; 3 299 027 ; 3 923 760 ; 3 308 105 and 4 098 990.

Other treatments disclosed in the prior art involve the addition of compounds to the polymer prior to fabrication in order to complex with the harmful components in the catalyst residue and deactivate them. Illustrative of these prior art treatments are those disclosed in Canadian patent 961 998, U.S. patent 4 013 622 and in U.S. patent 3 773 743.

For example, U.S. patent 3 773 743 discloses a method for improving the stability and color of olefin polymers by deactivating their Ziegler-Natta catalyst residues. This method involves high temperature (190 °C-250 °C) processing with hydroxyl compounds ($H_2O$ and primary alcohols) and with an organic base such as an alkyl amine ; aryl amine ; Li, Ca and Zn salts of carboxylic acids ; trialkyl phosphites ; and metal alkoxides. The concentration disclosed for the hydroxy source is the range of 0.5 to 1.5 weight percent and a concentration of 50 to 2 500 parts per million (ppm) is disclosed for the organic base. At the processing temperatures disclosed, some of the organic bases and the hydroxy sources would be volatile and cause foaming of the product if the processing were not done in a way to remove volatiles, e. g., as in devolatilizing esters.

In high temperature processing of Ziegler-Natta catalyzed polyolefin resins, such as in slot cast or blown film extrusion, it has been observed that the chloride catalyst residue present in the resins may cause corrosion of the processing equipment. For example, corrosion pitting has been observed on both the chill roll and internal adaptor and die surfaces during slot cast film extrusion. Internal adaptor and die surfaces of blown film extrusion equipment also are subject to corrosion. Deactivation of the catalyst residue has been required in a costly separate step prior to high temperature (⩾ 210 °C) processing of the resin.

An object of the present invention is to provide a film forming extrudable composition comprising a Ziegler-Natta catalyzed polyolefin and an extruded film made from such extrudable composition, which film is free from gel streaking.

Another object of the present invention is to provide a process wherein Ziegler-Natta catalyzed polyolefin film forming compositions may be extruded without optical degradation phenomenon

appearing within the extruded film.

Another object of the present invention is to provide an anti-gel compound, which when added to Ziegler-Natta catalyzed polyolefins is useful in removing or reacting with the chloride residue in said polyolefins to prevent gel streaking or pinstriping from occurring in subsequent extrusion processes.

An object of the present invention is to provide an improved process for extruding tubular blown polyolefin film substantially free of Ziegler-Natta chloride residues.

Another object of the present invention is to provide an improved process for producing, at high temperatures (⩾ 210 °C), an extruded film made from Ziegler-Natta catalyzed polyolefin resin, which process is substantially free from corrosion.

This invention is based on the discovery that an optical degradation phenomenon, known as gel streaking and pinstriping, present in extruded Ziegler-Natta catalyzed polyolefins, can be substantially prevented through the addition of small amounts of an organic compound of high molecular weight and relatively low volatility. The organic compound consists of a hydrogen chloride acceptor having a molecular weight ⩾ 180 with ⩽ 5 % by weight volatiles at 180 °C as measured by thermal evolution analysis (TEA). According to the present invention, the incidence of gel streaking or pinstriping in the film during the extrusion of low pressure, low density ethylene hydrocarbon polymer resin is minimized through the use of a composition comprising :

a majority of a low pressure, low density ethylene hydrocarbon polymer resin ; and

a minor amount of an anti-oxidant and a hydrogen chloride acceptor as defined herein. This invention also relates to an improved method of extruding low pressure, low density ethylene hydrocarbon polymer resins which comprise incorporating minor amounts of an anti-oxidant and a hydrogen chloride acceptor into said resin prior to extrusion thereof.

In one aspect, the present invention relates to an extrudable film forming composition which, when extruded, forms a film essentially devoid of gel streaking and pinstriping, the film forming extrudable composition comprising a polyolefin resin, an anti-oxidant and anti-gel compound. The polyolefin resin contains chloride residue from a Ziegler-Natta catalyst used in its preparation. The anti-oxidant is present in an amount sufficient to prevent oxidation of the film during extrusion processing and subsequent storage thereof. The anti-gel compound is present in an amount sufficient to neutralize the chloride residue in the polyolefin, which amount also should be at least 0.8 times the amount of anti-oxidant present. Preferably, the amount of anti-gel compound is at least equal to the amount of anti-oxidant present.

The amount of anti-gel compound necessary to neutralize the chloride residue should be greater than 5 times, preferably greater than 10 times, and most preferably greater than about 20 times the amount of chloride residue present. When the ratio becomes too high, particularly at the higher chloride levels, e. g., at 200 ppm chloride residue, the anti-gel compound can exude to the polymer air interface and adversely affect polyolefin surface properties such as sealing, treatability and coefficient of friction. Below a 5 to 1 ratio, the amount of anti-gel compound may not be sufficient to neutralize the chloride residue to retard gel streaking etc.

Chloride residue from a Ziegler-Natta catalyst is typically present in a concentration between 5 and 500 ppm based upon the polyolefin. Chloride residue concentrations between about 5 and about 50 ppm are typical for polyethylene and chloride residue concentrations between 10 and 500 ppm are typical for polypropylene and polybutene made with Ziegler-Natta catalysts.

Anti-oxidants in a concentration of 20 to 500 ppm are typically added to polyethylene resin compositions. And concentrations of 200 to 5 000 ppm of anti-oxidant are typically added to polypropylene or polybutene resin compositions.

In another aspect, the present invention relates to a process for extruding a film forming polyolefin resin based composition into film. The resin based composition comprises a Ziegler-Natta catalyzed film grade polyolefin resin which contains a chloride residue in the range of between 5 and 500 ppm and anti-oxidant in the range of between 20 and 5 000 ppm based upon the polyolefin resin. The resin based composition is susceptible to gel streaking during formation of the film. This invention is based upon the discovery that such a process may be improved by extruding the resin based composition into the film in the presence of an acid acceptor. The acid acceptor is typically present in a concentration between 25 and 10 000 ppm, based upon the weight of the polyolefin resin and has a molecular weight ⩾ 180 with ⩽ 5 % by weight volatiles at 180 °C as measured by TEA.

The acid acceptor is uniformly dispersed in the polyolefin based extrusion composition. The dispersion can be effected by various dispersion techniques commonly employed by those skilled in the art of preparing extrudable composition. The acid acceptor could be introduced into the polyolefin either by directly dry blending with a granular polyolefin (e. g., polyethylene) via a V-type blender or by mixing via a Henschel type intensive mixer. The acid acceptor also could be hot compounded into the polyolefin to make a master batch for final letdown using conventional hot processing equipment such as a Banbury mixer, a Werner Pfleiderer twin screw mixing extruder or a single screw mixer extruder that has pelletization equipment on the head of the extruder.

The acid acceptor

The acid acceptor consists of a fatty acid amine of the formula :

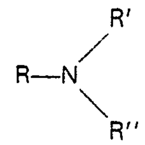

wherein R is $C_{12\text{-}24}$ alkyl or alkylene ;

R′ is hydrogen, lower alkyl, an alkanol, 1,3-propylenediamine or an ethoxy group of the formula $(C—C—O)_xH$, wherein x is an integer between 2 and 5 ; and

R″ is R or R′.

The fatty acid amine used in this invention is normally either liquid or solid at room temperature, has a molecular weight $\geqslant 180$, and has $\leqslant 5\,\%$ by weight volatiles at 180 °C as measured by TEA. Below molecular weights of 180, volatility becomes a problem, resulting in bloom on the surface of the film or causes plate-out or smoking on high temperature extrusion. This can adversely affect such properties as sealing, treatability and surfaces characteristics, in general. Increased volatility also can be manifested in foaming of the film extrudate and lensing in the blown film bubble. Too high a molecular weight simply requires more anti-gel compounds. Surface properties also can be affected.

Suitable fatty acid amines according to the present invention include a saturated fatty acid amine such as lauryl amine, myristyl amine, palmityl amine, stearyl amine, arachidyl amine, behenyl amine and the like ; a monounsaturated fatty acid such as oleyl amine and erucyl amine ; a di-saturated fatty acid amine such as di-lauryl amine, di-myristyl amine, dipalmityl amine, di-stearyl amine, di-arachidyl amine, di-behenyl amine ; a di-monounsaturated fatty acid amine such as di-oleyl amine and di-erucyl amine ; a mixed saturated and mono-unsaturated fatty acid amine such as lauryl-oleyl amine, lauryl-stearyl amine, oleyl-erucyl amine and the like ; lauryl, myristyl, palmityl, stearyl, arachidyl, behenyl, oleyl or erucyl-methanol, ethanol, propanol or butanol amines ; dimethanol, diethanol, dipropanol or dibutanol-lauryl, myristyl, palmityl stearyl, arachidyl, behenyl, oleyl or erucyl amines ; dimethyl, diethyl, dipropyl or dibutyl-lauryl, myristyl, palmityl, stearyl, arachidyl, behenyl, oleyl or erucyl amines ; alkoxylated lauryl, myristyl, palmityl, stearyl, arachidyl, behenyl, oleyl or erucyl amines derived using 2 to 10 mols of ethylene oxide, propylene oxide or butylene oxide ; N-lauryl, myristyl, palmityl, stearyl, arachidyl, behenyl, oleyl, or erucyl-1,3-propylene diamine ; diethanol tallow amine having between 14 and 18 carbon atoms ; dimethyl soya amine having between 14 and 18 carbon atoms.

Olefin polymers

The extrudable olefin polymers employed in the extrudable compositions of the present invention are normally solid materials, that is, solid at room temperature. Any extrusion grade olefin polymer can be used in the compositions of the present invention. The term « olefin polymer » thus includes homopolymers of the olefins, as well as interpolymers of one or more olefins with each other, and/or up to about 30 weight percent of one or more monomers which are copolymerizable with such olefins. The olefins are such as ethylene, propylene, 1-butene, isobutylene, 4-methyl-pentene-1, hexene-1, octene-1, nonene-1, decene-1, as well as inter-polymers of one or more of such olefins and one or more other monomers which are interpolymerizable with such olefins, such as other vinyl and diene compounds, i. e. those having the group

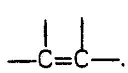

Preferred copolymers are the ethylene copolymers such as ethylene/propylene copolymers, ethylene/butene-1 copolymers, ethylene/hexene-1 copolymers, ethylene octene-1 copolymers, and the like. Preferred ethylene interpolymers would include two or more of the following : propylene, butene-1, hexene-1, 4-methyl-pentene-1 and octene-1. Preferred propylene interpolymers would include ethylene, butene-1, hexene-1, 4-methyl-pentene-1 and octene-1 as monomers.

Also included in the term polymer are blends of one polymer with one or more other polymers. Illustrative of such blends are ethylene/olefinic polymers with one or more of the following : polypropylene, high pressure low-density polyethylene high density polyethylene, polybutene-1, and polar monomer containing olefin copolymers such as ethylene/acrylic acid copolymers, ethylene/methyl acrylate copolymer, ethylene/ethylacrylate copolymer, ethylene/vinyl acetate copolymer, ethylene/acrylic acid/ethyl acrylate terpolymer, ethylene/acrylic acid/vinyl acetate teropolymer, and the like.

Also included within the terms polar monomer containing olefin copolymers are the metallic salts of those olefin copolymers, or blends thereof, which contain free carboxylic acid groups. Illustrative of such polymers are ethylene/acrylic acid copolymer, ethylene/methacrylic acid, oxidized polyolefins, propylene/acrylic acid copolymer, butene/acrylic acid copolymer and the like.

Illustrative of the metals which can be used to provide the salts of said carboxylic acid polymers are

the one, two and three valence metals, such as sodium, lithium, potassium, calcium, magnesium, aluminium, barium, zinc, zirconium, beryllium, iron, nickel, cobalt, and the like.

The preferred olefin polymers for use in the present invention are polymers of ethylene, and the most preferred polymers are those having a melt index of about 0.1 to 10 grams per 10 minutes, a density of about 0.910 to 0.955. Low density ethylene polymer has a density of between approximately 0.910 and 0.925, medium density ethylene polymer has a density of between approximately 0.925 and 0.940, and high density ethylene polymer has a density of between approximately 0.940 and 0.970. Thus, the low density ethylene copolymers are the most preferred olefin polymers to be used in the present invention, although the medium and high density polymers may also be used.

Preferred low pressure, low density ethylene copolymers for use in the present invention include those which may be produced in accordance with the procedures set forth in European Patent Publication No. 4645 and European Patent Publication No. 4647.

Other low pressure, low density ethylene hydrocarbon copolymers preferred for use in the present invention are those which may be prepared as described in U.S. Patent 4 011 382.

The olefin polymers may be used in the form of powders, pellets, granules, or any other form that can be fed to an extruder.

The anti-oxidants

As noted above, the extrudable compositions of the present invention contain at least one anti-oxidant for the olefin polymer. These anti-oxidants are present in stabilizingly effective quantities. Such amounts are about 0.002 to 0.5, and preferably about 0.01 to 0.05, percent by weight, based on the weight of the olefin polymer. The anti-oxidant stabilizers which may be employed in the compositions of the present invention include all those polyolefin anti-oxidants commonly employed in olefin polymer based film extrusion compositions. These materials are such as are capable or providing anti-oxidant protection at processing temperatures of the order of about 135 to 344 °C (275 to 650 °F), or higher.

Such anti-oxidant stabilizers include hindered phenols, such as p-hydroxyphenylcyclohexane ; di-p-hydroxyphenylcyclohexane discresylolpropane ; tertiary butyl para cresol ; 2,6-di-tert-butyl-p-cresol ; 2,4,6-tri-tert-butylphenol ; octadecyl-3-(3,5-di-tert-butyl-4-hydroxyphenyl)propionate ; tetra bis [methylene 3-(3',5'-di-tert-butyl-4'-hydroxyphenyl)propionate]methane ; 1,3,5-trimethyl-2,4,6-tris(3,5-di-tert-butyl-4-hydroxybenzyl)benzene ; tris(3,5-di-tert-butyl-4-hydroxybenzyl)isocyanate ; 1,3,5-tris-(4-tert-butyl-3-hydroxy-2,6 dimethyl benzyl)-1,3,5-triazine-2,4,6-(1H,3H,5H)-trione ; and bis-[3,3-bis-4'-(hydroxy-3'-tert-butyl-phenyl)-butanoic acid]-glycol ester, condensation products of dialkylphenols with formaldehyde, reaction products of phenol with styrene, 1,1'-methylene-bis(4-hydroxy-3,5-tert-butyl-phenol), 2,2'-methylene-bis-(4-methyl-6-tert-butylphenol), 2,6-(2-tert-butyl-4-methyl-6-methylphenol)-p-cresol, phenylethylpyrocatechol, phenolisopropylpyrocatechol, 1,1,3-tris(2'-methyl-5'-t-butyl-4-hydroxyphenol)butane, 2,2-methylene-bis[6-(α-methylcyclohexyl)-4-methylphenol], 1,3,5-trimethyl-2,4,6-tris-(3',5'-di-t-butyl-4-hydroxybenzyl)benzene and α-naphthol ; and sulfur containing compounds such as 2,2'-thio-bis-(4-methyl-6-tert-butylphenol), 4,4'-thio-bis-(3-methyl-6-tert-butylphenyl), distearyl thiodipropionate and dilauryl thiodipropionate ; and phosphite compounds such as tri(mixed mono and dinonyl phenyl)phosphites ; phosphite esters of lauryl and stearyl alcohol ; di-stearyl-pentaerythritol-diphosphite ; bis(2,4-di-tert-butylphenyl)pentaerythritol diphosphite ; and tri-2,4-di-tert-butylphenyl phosphite ester.

The preferred primary or hindered phenolic anti-oxidant stabilizers which are employed in the compositions of the present invention are 2,6-ditertiary butyl paracresol, or butylated hydroxy toluene (BHT) ; octadecyl-3-(3,5-di-tert-butyl-4-hydroxy phenyl)propionate (Irganox 1076) ; or tetra-bis[methylene 3-(3',5'-di-tert-butyl-4'-hydroxyphenyl)propionate]methane. The preferred secondary stabilizers include dilauryl thiodipropionate (DLTDP) ; distearyl thiodipropionate (DSTDP) ; tri(mixed mono and dinonyl phenyl) phosphite (Polygard) ; di-stearyl-pentaerythritol-diphosphite (Weston 618).

The hindered phenolic anti-oxidants may be used individually or in various combinations with one another or the secondary stabilizers in the compositions of the present invention. Other additives include slip agents such as fatty acid amides, inorganic antiblocks such as finely divided silica or calcium carbonate, cling agents, fillers or colorants.

Extrudable Compositions

The extrudable compositions of the present invention may be used in any of the forms of such compositions which are commonly employed in the extruded film arts, such as compounds modified with various slip and anti-block additives for specific end use applications.

These extrudable compositions are thermoplastic in nature. In addition to the olefin polymer, anti-gel compounds, anti-oxidant, the compositions of the present invention many contain other adjuvant materials which are commonly employed in olefin polymer-based extrudable film compositions. Such other adjuvants would include plasticizers, fillers, pigments, lubricants, slip agents, modifiers and similar materials, except talc.

The fillers which may be used in the olefin polymer-based extrudable compositions of the present

invention are the fillers which are commonly used with such polymers. The fillers are used in amounts which correspond to about 1 to 20 percent by weight, based on the weight of the olefin polymer. Such fillers would include materials such as carbon black, titanium dioxide, clays, diatomaceous earth, calcium silicates and others known in the art.

The plasticizers which may be employed in the olefin polymer-based extrudable compositions of the present invention are the plasticizers which are commonly used with such polymers. The plasticizers are used in amounts which would correspond to about 1 to 25 percent by weight based on the weight of olefin polymer. Such plasticizers would include materials such as phthalates, phosphates, adipates, azelates, amine based polyols, and a number of other similar products.

The lubricants which are commonly employed in the olefin polymer-based extrudable compositions are the lubricants which are commonly used with such polymers. The lubricants are used in amounts which correspond to about 0.02 to 0.2 percent by weight of lubricant agent based on the weight of the olefin polymer. Examples of such lubricants are fatty acid amides such as stearamide, oleamide, behenamide and erucamide.

Extruding conditions

The extrudable conditions of the present invention are particularly designed for use in equipment utilized for tubular film, cast film and extrusion coating products. Such equipment may have hold-up areas or areas of stagnation that retard the flow of extrudate therethrough, leads to the development of gel streaking and pinstriping in the absence of the use of the anti-gel additives of the present invention. In such equipment the polyolefin based extrudable compositions are subjected to extrusion temperatures of about 135 to 344 °C (275 to 650 °F), and preferably about 190 to 344 °C (375 to 650 °F), under varying conditions of head pressure, and for periods of time of about 0.5 to 10 minutes.

The film is usually prepared in sheets which are about 2.54 to 254 µm (0.1 to 10 mils) thick.

According to the present invention, the polyolefin resin compositions are not exposed to post-reactor high temperature compounding or finishing which could introduce hydroperoxides into the composition prior to film extrusion. Instead the acid acceptor is added via a master batch or by directly dry blending it into the granular polyolefin resin prior to extrusion thereof. Another advantage of this invention is that gas treatment (e. g., with propylene oxide) after polymerization of the resin is not required nor are subsequent alcohol washes to remove the propylene oxide or ethylene oxide gas nor the subsequent drying process to remove the alcohol. Also unnecessary are the need for devolatilization of alcohols or water which could be added to neutralize and break down catalyst residue.

Another advantage of the present invention is that the fatty acid amines may be incorporated into the polyolefin based resin composition without adversely affecting other additives normally used in such compositions such as hindered phenolic anti-oxidants and phosphites, slip/anti-block materials such as fatty amides, silica or calcium carbonate. The fatty acid amines do not adversely interact with these other additives nor do they cause such problems as discoloration and odor.

Still another advantage of the present invention relates to high temperature extrusion of Ziegler-Natta catalyzed polyolefin resin, i. e., at temperatures above about 210 °C up to 300 °C. The (Ziegler-Natta) catalyst residue, primarily chlorides present in such polyolefin resins, is liberated as hydrogen chloride during such high temperature processing. The liberated hydrogen chloride can cause removal of chrome plating or corrosion of equipment, both in the adaptor and die sections, as well as on the chill rolls used in high temperature slot cast film extrusion. The hydrogen chloride also will adversely affect the metal and chrome plated surfaces in blow molding and injection molding equipment. The fatty acid amines of this invention neutralize the catalyst residues and consequently prevent adverse corrosion effects in processing equipment or on a chill roll. The solubility of the fatty acid amines in the polyolefins enables them to reach the catalyst sites to break down and neutralize the chloride residue.

The following examples are illustrative of the present invention and are not intended as a limitation of the scope thereof.

Example 1

Preparation of polymer resins

Two low pressure, low density ethylene-butene-1 copolymer resins were prepared according to the procedure disclosed in South African Patent Publication No. 79-01365, published September 22, 1980, entitled « Process for Making Film From Low Density Ethylene Hydrocarbon Copolymer » by W.A. Fraser et al. The properties of the ethylene-1-butene-1 copolymer resins were determined by the following methods :

Density was determined according to ASTM D-1505. A plaque was conditioned for one hour at 100 °C to approach equilibrium crystallinity. Density is reported as g/cm$^3$.

Melt Index (MI) was determined according to ASTM D-1238, Condition E. It was measured at 190 °C and 3.03 bar (44 psi) and reported as grams/10 minutes.

Flow Index (HLMI) was measured according to ASTM D-1238, Condition F. It was measured at 10

times the weight used in the melt index test above and reported as grams per 10 minutes.

Melt Flow Ratio (MFR) was calculated as Flow Index/Melt Index.

Ti, Al and Si catalyst residues in the ethylene-butene-1 copolymer in ppm was measured by induction coupled plasma emission spectroscopy.

Cl catalyst residue in the ethylene-butene-1 copolymer in ppm was measured by a Dohrmann micro-coulometric titration system.

One of the ethylene-butene-1 copolymer resins, designated A, had the following properties : a melt index of 1.0 ; a MFR of 28 ; a density of 0.918 g/cm$^3$ ; and a catalyst residue in ppm of Ti-2, Al-73, Si-56 and Cl-13.

The other ethylene-butene-1 copolymer resin, designated B, had the following properties : a melt index of 2.0 ; a MFR of 28 ; a density of 0.918 g/cm$^3$ ; and a catalyst residue in ppm of Ti-3, Al-89, Si-97 and Cl-16.

Either resin A or resin B was used in the resin compositions of all the subsequent examples herein.

Preparation of polymer resin compositions

One of two methods to prepare polymer resin compositions was employed in the examples. In one method, the components were dry blended in a roll drum for 20 minutes at room temperature with a virgin resin. In the other method, the components were compounded into a masterbatch concentrate utilizing a Banbury batch mixer coupled to a Farrel Birmingham single screw extruder melt pump. The components were mixed in the Banbury mixer for 4 to 5 minutes, dropped at 127 °C (260 °F, and extruded through an extruder melt pump using a throat temperature of 104 °C (220 °F), a barrel temperature of 149 °C (300 °F), and a die temperature of 149 °C (300 °F).

Example 2A

A series of experiments were run to demonstrate the effectiveness of the use of a fatty acid amine in polyolefin based film extrusion compositions in order to prevent the formation of gel streaks/pinstriping in the extruded film. Table I below summarizes the results for a number of control formulations which dit not contain the fatty acid amine anti-gel compound of this invention. The control formulations were prepared by one of the methods described hereinabove. After the formulations were prepared, films were extruded in a tubular extrusion device for various periods of time to assess gel formation. The film was extruded at 1.36 kg (3 lbs)/hr with a 196 °C (385 °F) melt temperature using a 2.54 cm (1-inch) Killion 24 to 1 length to diameter extruder equipped with a 3.175 cm (1 1/4-inch) die with a 0.762 cm (0.30 inch) gap. No nitrogen purge was used on the extrusion hopper.

The extruded films were approximately 38.1 µm (1.5 mils) thick. During extrusion, the films were examined periodically for gel streak formation and pinstriping. Table I hereinbelow sets forth the resin compositions that were employed and the results that were obtained with respect to gel streak formation/pinstriping. The number symbols used to designate the visual appearance of the film with respect to gel streaking/pinstriping have the following meanings :

0 — clear of gel streaking/pinstriping
1 — slight gel streaking/pinstriping
2 — moderate gel streaking/pinstriping
3 — severe gel streaking/pinstriping

A review of the information disclosed in Table I shows that the control formulations for runs 2-11 exhibited gel streaking/pinstriping in the extruded films in the presence of hindered phenolic anti-oxidants.

Table I

| Run | Formulation | Concentration (ppm) | Gel streaking rating | Pinstriping rating |
|---|---|---|---|---|
| 1 | Resin A | — | 1 | 0 |
| 2 | Resin A<br>Tetra-bis[methylene 3-(3',5'-di-tert-butyl-4'-hydroxyphenyl)propionate] methane | 200 | 2 | 2 |
| 3 | Resin A<br>Octadecyl 3-(3',5'-di-tert-butyl-4'-hydroxyphenyl)propionate | 200 | 2 | 2 |

Table 1 (Continued)

| Run | Formulation | Concentration (ppm) | Gel streaking rating | Pinstriping rating |
|---|---|---|---|---|
| 4 | Resin A<br>Di-tert-butyl-para-cresol | 200 | 2 | 2 |
| 5 | Resin A<br>1,3,5-tris(4-tert-butyl-3-hydroxy-2,6 dimethyl benzyl)-1,3,5-triazine-2,4,6-(1H,3H,5H)-trione | 200 | 3 | 3 |
| 6 | Resin A<br>1,3,5-trimethyl-2,4,6-tris(3.5-di-tert-butyl-4-hydroxybenzyl)benzene | 200 | 3 | 3 |
| 7 | Resin A<br>Tris(3,5-di-tert-butyl-4-hydroxy benzyl)isocyanate | 200 | 3 | 3 |
| 8 | Resin A<br>Bis-[3,3-bis-4'-hydroxy-3'-tert-butyl-phenyl)-butanoic acid]-glycol ester | 200 | 3 | 3 |
| 9 | Resin A<br>Tetra-bis[methylene 3-(3',5'-di-tert-butyl-4'-hydroxyphenyl)propionate]methane;<br>Di-stearyl-pentaerythritol-diphosphite | 200<br><br>200 | 3 | 3 |
| 10 | Resin A<br>Tetra-bis[methylene 3-(3',5'-di-tert-butyl-4'-hydroxyphenyl)propionate]methane;<br>Tri-nonyl-phenyl phosphite ester | 200<br><br>400 | 3 | 3 |
| 11 | Resin A<br>Tetra-bis[methylene 3-(3',5'-di-tert-butyl-4'-hydroxyphenyl)propionate]methane;<br>Di-stearyl-pentaerythritol-diphosphite;<br>glycerol monostearate | 200<br><br>200<br>500 | 3 | 3 |

In another series of experiments, fatty acid amines were added to the control formulations to prevent the formation of gel streaks in the extruded film. The formulations were prepared according to the second method previously described herein. The resin based composition was extruded at 10.4 kg (23 lbs)/hr with a 210 °C (410 °F) melt temperature using a 3.81 cm (1 1/2-inch) diameter Sterling extruder equipped with a 7.62 cm (3-inch) diameter spiral die 1.524 mm ; (60 mil gap). No nitrogen purge was used on the extruder hopper. The extruded films were approximately 38.1 µm (1.5 mils) thick. During extrusion, the films were examined periodically for gel streaking/pinstriping. Table II below discloses control compositions and example compositions for runs 12-20 that were employed and the results obtained with respect to gel streak formation/pinstriping. The number symbols used have the same meaning previously given herein.

A review of the information disclosed in Table II shows that the addition of a fatty acid amine to the control formulations completely, or at least substantially, prevents the formation of gel streaking/pinstriping in the extruded films, even in the presence of hindered phenolic anti-oxidants.

Table II

| Run | Formulation | Concentration (ppm) | Gel streaking rating | Pinstriping rating |
|---|---|---|---|---|
| 12 | Resin B<br>Octadecyl 3-(3',5'-di-tert-butyl-4'-hydroxyphenyl)propionate | 200 | 2 | 2 |
| 13 | Resin B<br>Octadecyl 3-(3',5'-di-tert-butyl-4'-hydroxyphenyl)propionate;<br>lauryl amine | 200<br><br>500 | 0 | 0 |

Table 2 (Continued)

| Run | Formulation | Concentration (ppm) | Gel streaking rating | Pinstriping rating |
|---|---|---|---|---|
| 14 | Resin B | | | |
| | Octadecyl 3-(3',5'-di-tert-butyl-4'-hydroxyphenyl)propionate; | 200 | 0 | 0 |
| | stearyl amine | 500 | | |
| 15 | Resin B | | | |
| | Octadecyl 3-(3',5'-di-tert-butyl-4'-hydroxyphenyl)propionate; | 200 | 0 | 0 |
| | diethanol lauryl amine | 500 | | |
| 16 | Resin B | | | |
| | Octadecyl 3-(3',5'-di-tert-butyl-4'-hydroxyphenyl)propionate; | 200 | 0 | 0 |
| | diethanol stearyl amine | 500 | | |
| 17 | Resin B | | | |
| | Octadecyl 3-(3',5'-di-tert-butyl-4'-hydroxyphenyl)propionate; | 200 | 0 | 0 |
| | diethanol tallow amine | 500 | | |
| 18 | Resin B | | | |
| | Octadecyl 3-(3',5'-di-tert-butyl-4'-hydroxyphenyl)propionate; | 200 | 2 | 3 |
| | stearyl alcohol | 500 | | |
| 19 | Resin B | | | |
| | Octadecyl 3-(3',5'-di-tert-butyl-4'-hydroxyphenyl)propionate; | 200 | 3 | 3 |
| | glyceryl mono stearate | 500 | | |
| 20 | Resin B | | | |
| | Octadecyl 3-(3',5'-di-tert-butyl-4'-hydroxyphenyl)propionate; | 200 | 3 | 3 |
| | sorbitan mono laurate | 500 | | |

Example 2B

A series of tests was run as in Example 1 except as follows : Resin A based compositions were made via the first method disclosed previously herein. The films were extruded at 1.36 kg (3 lbs)/hr with a 193 °C (380 °F) melt temperature using a one inch diameter Killion extruder equipped with a 3.175 cm (1 1/4 inch) spiral die 0.762 mm ; (30 mil die gap). No nitrogen purge was employed except for run 21 which used a 0.0283 $m^3$/hr (1 SCFH) rate into the extruder hopper. Table III below discloses the various formulations that were evaluated and the gel streaking/pinstriping rating of the extruded films. The films of runs 23 and 24 using formulations containing anti-gel compounds of this invention showed substantial improvement in gel streaking/pinstriping properties over those of control runs 21 and 22.

Table III

| Run | Formulation | Concentration (ppm) | Gel streaking rating | Pinstriping rating |
|---|---|---|---|---|
| 21 | Resin A | | | |
| | Tetra-bis[methylene 3-(3',5'-di-tert-butyl-4'-hydroxyphenyl)propionate]methane | 200 | 3 | 3 |
| 22 | Resin A | | | |
| | Tetra-bis[methylene 3-(3',5'-di-tert-butyl-4'-hydroxyphenyl)propionate]methane | 200 | 3 | 3 |
| 23 | Resin A | | | |
| | Tetra-bis[methylene 3-(3',5'-di-tert-butyl-4'-hydroxyphenyl)propionate]methane; | 200 | 0 | 0 |
| | diethanol stearyl amine | 500 | | |
| 24 | Resin A | | | |
| | Tetra-bis[methylene 3-(3',5'-di-tert-butyl-4'-hydroxyphenyl)propionate]methane; | 200 | 0 | 1 |
| | dimethyl stearyl amine | 500 | | |

Example 3

A series of tests was run as in Example 1 except as follows : Resin B based compositions were made via the second method disclosed previously herein. The films were extruded at 9.98-10.9 kg (22-24 lbs)/hr with a 210 °C (410 °F) melt temperature using a 3.81 cm (1 1/2 inch)diameter 24 to 1 length to diameter Sterling extruder equipped with a 7.62 cm (3 inch) diameter spiral pin die 1.524 mm ; (60 mil gap). No nitrogen purge was used on the extruder hopper. Table IV below discloses the various formulations that were evaluated and the gel streaking/pinstriping rating of the extruded films. The results of these runs, 25-29, show that for an ethylene-butene-1 copolymer, a ratio of anti-gel compound to anti-oxidant of 0.5 does not prevent gel streaking/pinstriping while an anti-gel/anti-oxidant compound ratio of 1 to 1 or greater does prevent gel streaking/pinstriping in the extruded films.

Table IV

| Run | Formulation | Concentration (ppm) | Gel streaking rating | Pinstriping rating |
|---|---|---|---|---|
| 25 | Resin B<br>Octadecyl 3-(3′,5′-di-tert-butyl-4′-hydroxyphenyl)propionate;<br>diethanol cocoamine | <br>200<br>500 | <br>0 | <br>0 |
| 26 | Resin B<br>Octadecyl 3-(3′,5′-di-tert-butyl-4′-hydroxyphenyl)propionate;<br>diethanol cocoamine | <br>200<br>100 | <br>3 | <br>3 |
| 27 | Resin B<br>Octadecyl 3-(3′,5′-di-tert-butyl-4′-hydroxyphenyl)propionate;<br>diethanol tallow amine | <br>200<br>500 | <br>0 | <br>0 |
| 28 | Resin B<br>Octadecyl 3-(3′,5′-di-tert-butyl-4′-hydroxyphenyl)propionate;<br>diethanol tallow amine | <br>100<br>250 | <br>0 | <br>0 |
| 29 | Resin B<br>Octadecyl 3-(3′,5′-di-tert-butyl-4′-hydroxyphenyl)propionate;<br>diethanol tallow amine | <br>200<br>200 | <br>0 | <br>0 |

Example 4

Volatility of some anti-gel compounds was determined by thermal evolution analysis. This measurement, made with the DuPont model 916 Thermal Evolution Analyzer (TEA) determines the fraction of species present in a sample of less than approximately 500 molecular weight. A 5 mg sample is heated under nitrogen at 32 °C/min up to 300 °C. As the sample heats, evolved gases are swept by nitrogen to a flame ionization detector. Calibration with $C_{20}$ standards permits translation of instrument output into volatile weight. Normalizing by sample weight and multiplying by 100 gives weight percent volatiles. The TEA volatiles for the fatty acid amines useful in this invention are all below about 5 % by weight, as shown in Table V below :

Table V

Additive volatility using TEA

| Additive | Weight loss at 180°C (%) |
|---|---|
| diethanol lauryl amine | 3.11% |
| diethanol myristyl amine | 2.30% |
| diethanol stearyl amine | 0.06% |

Example 5

A series of tests was run to demonstrate that the addition of the fatty acid amine to the extrudable film compositions does not adversely affect the physical properties of the extruded film to any substantial degree. Films made from Resin A based composition were evaluated in a discoloration and coefficient of friction test and films made from Resin B based composition were evaluated in a roll blocking test.

In the coefficient of friction test, the extrusion conditions were as follows: Resin A based compositions were extruded on a 6.35 cm (2 1/2 inch) diameter 24 to 1 length to diameter Egan extruder equipped with a 10.16 cm (6 inch) diameter Sano die having a 2.54 mm (100 mil) die gap. The extrusion rate was about 38.6 kg (85 lbs)/hr with a melt temperature of about 199 °C (390 °F). The extruded films were approximately 38.1 μm (1.5 mils) thick.

Table VI below sets forth the Resin A based compositions used for the coefficient of friction comparisons. The coefficient of friction is measured by ASTM D-1894-63. The data indicates that film made from a formulation containing a fatty acid amine did not have any significantly different coefficient of friction, as compared to a control formulation which did not contain the fatty acid amine, but was otherwise the same, in terms of composition, as the other formulation.

Table VI

| Run | Formulation | Concentration (ppm) | Coefficient of friction |
|---|---|---|---|
| 30 | Resin A | | |
| | Octadecyl 3-(3'-5'-di-tert-butyl-4'-hydroxyphenyl)propionate; | 300 | 30 min-0.11 |
| | Tri-nonyl-phenyl phosphite ester; | 200 | 24 hrs-0.11 |
| | erucamide; | 1000 | |
| | superfloss | 5300 | |
| 31 | Resin A | | |
| | Octadecyl 3-(3',5'-di-tert-butyl-4'-hydroxyphenyl)propionate; | 300 | |
| | Tri-nonyl-phenyl phosphite ester; | 200 | 30 min-0.11 |
| | erucamide; | 1000 | 24 hrs-0.12 |
| | superfloss (finely divided diatomaceous earth); | 5300 | |
| | diethanol stearyl amine | 250 | |

In the roll blocking test, the Resin B based film compositions set forth in Table VII below were subjected to induced blocking which was measured in grams (sample conditions for 24 hrs. at 60 °C under a 9.65 mbar (0.14 psi) load).

Table VII

| Run | Formulation | Concentration (ppm) | Induced blocking (gms) |
|---|---|---|---|
| 32 | Resin B | | |
| | 1,3,5-Tris(4-tert-butyl-3-hydroxy-2,6 dimethyl benzyl)-1,3,5-triazine-2,4,6-(1H,3H,5H)-trione; | 100 | 50 |
| | Di-stearyl-pentaerythritol-diphosphite; | 100 | |
| | superfloss (finely divided diatomaceous earth); | 5000 | |
| | erucamide | 800 | |
| 33 | Resin B | | |
| | 1,3,5-Tris(4-tert-butyl-3-hydroxy-2,6 dimethyl benzyl)-1,3,5-triazine-2,4,6-(1H,3H,5H)-trione; | 100 | |
| | Di-stearyl-pentaerythritol-diphosphite; | 100 | |
| | superfloss (finely divided diatomaceous earth); | 5000 | 54 |
| | erucamide; | 800 | |
| | diethanol tallow amine | 500 | |

In the color rating test, films prepared from Resin A formulations as described hereinabove were aged 4 weeks at 60 °C. The extruded film was made as described herein for Resin A compositions except a 1.524 mm (60 mil) die gap was employed with a 35.8 kg (79 lb/hr) extrusion rate. No discoloration was observed.

Example 6

A series of tests were run as described herein for example 1 for Resin A based composition made under the extrusion conditions of example 5 (1.524 mm ; 60 mil die gap with 35.8 kg (79 lb/hr) extrusion rate). Gel streaking and pinstriping were evaluated for control compositions and Resin A based compositions containing fatty acid amines according to this invention. Table VIII sets forth the results which show a substantial improvement in gel streaking/pinstriping properties for the films of the Resin A formulations of the invention (runs 35-38) over the control formulation (run 34).

Table VIII

| Run | Formulation | Concentration (ppm) | Gel streaking rating | Pinstriping rating |
|---|---|---|---|---|
| 34 | Resin A | | | |
| | Octadecyl 3-(3',5'-di-tert-butyl-4'-hydroxyphenyl)propionate | 125 | 2 | 3 |
| 35 | Resin A | | | |
| | Octadecyl 3-(3',5'-di-tert-butyl-4'-hydroxyphenyl)propionate; | 225 | 0 | 0 |
| | Tri-nonyl-phenyl phosphite ester; | 200 | | |
| | superfloss (anti-block); | 5300 | | |
| | erucamide (slip agent); | 1000 | | |
| | diethanol tallow amine | 400 | | |
| 36 | Resin A | | | |
| | Octadecyl 3-(3',5'-di-tert-butyl-4'-hydroxyphenyl)propionate; | 300 | | |
| | Tri-nonyl-phenyl phosphite ester; | 350 | 0 | 0 |
| | superfloss; | 9300 | | |
| | erucamide; | 1750 | | |
| | diethanol tallow amine | 700 | | |
| 37 | Resin A | | | |
| | Octadecyl 3-(3',5'-di-tert-butyl-4'-hydroxyphenyl)propionate; | 225 | 0 | 0 |
| | Tri-nonyl-phenyl phosphite ester; | 200 | | |
| | superfloss; | 5300 | | |
| | erucamide; | 1000 | | |
| | diethanol stearyl amine | 400 | | |
| 38 | Resin A | | | |
| | Octadecyl 3-(3',5'-di-tert-butyl-4'-hydroxyphenyl)propionate; | 300 | 0 | 0 |
| | Tri-nonyl-phenyl phosphite ester; | 350 | | |
| | superfloss; | 9300 | | |
| | erucamide; | 1750 | | |
| | diethanol stearyl amine | 700 | | |

**Claims**

1. A process for extruding a film forming polyolefin resin based composition into film, which composition comprises a Ziegler-Natta catalyzed film grade polyolefin resin which contains a chloride residue in the range of between 5 and 500 ppm and anti-oxidant in the range of between 20 and 5 000 ppm, which composition is susceptible to gel streaking and pinstriping during the formation of said

film, characterized by :
extruding said composition into said film in the presence of between 25 and 10 000 ppm of an acid acceptor consisting of a fatty acid amine of the formula :

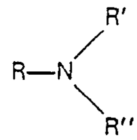

wherein R is $C_{12}$-$C_{24}$ alkyl or alkylene ; R' is hydrogen, lower alkyl, alkanol, 1,3-propylene diamine or an ethoxy group of the formula :

$$(C—C—O)_xH$$

wherein x is an integer between 2 and 5 ; and

R'' is R or R' ;

said acid acceptor having a molecular weight ≥ 180 with ≤ 5 % by weight volatiles at 180 °C as measured by thermal evolution analysis ;
said concentration of said acceptor being sufficient to neutralize said chloride residue in said composition and being at least 0.8 times the concentration of said anti-oxydant ;
said composition not containing talc.

2. A process as defined in claim 1, wherein said polyolefin is an ethylene polymer, said chloride residue concentration is between 5 and 50 ppm, said anti-oxidant concentration is between 20 and 500 ppm, and said fatty acid amine concentration between 25 and 1 000 ppm.

3. A process as defined in claim 1, wherein said polyolefin resin is polypropylene or polybutene, said chloride residue concentration is between 10 and 500 ppm, said anti-oxidant concentration is between 200 and 5 000 ppm, and said fatty acid amine concentration is between 200 and 10 000 ppm.

4. A process as defined in claim 1, wherein said fatty acid amine is present in an amount at least 5 times the amount of chloride residue present, preferably in a fatty acid amine to chloride residue ratio of greater than 10 to 1.

5. A process as defined in claim 2, wherein said ethylene polymer is low pressure, low density, ethylene-butene-1-copolymer.

6. A process as defined in any of claims 1 to 5, wherein said fatty acid amine is lauryl amine, stearyl amine, or behenyl amine, or combinations thereof ; diethanol lauryl amine, diethanol stearyl amine, diethanol behenyl amine or combinations thereof ; diethanol tallow amine having between 14 and 18 carbon atoms or dimethyl soya amine having between 14 and 18 carbon atoms.

7. A process as defined in any of claims 1 to 6, wherein said polyolefin resin based composition is extruded under an extrusion temperature of at least 135 to 344 °C (275 to 650 °F) and a throughput time for said composition in the extruding equipment of about 0.2 to 10 minutes.

8. An extruded film essentially devoid of gel streaking and pinstriping obtainable according to the process of any of claims 1 to 7.

9. An extrudable film forming composition comprising a polyolefin resin containing a chloride residue in the range of between 5 and 500 ppm, and anti-oxydant in the range of between 20 and 5 000 ppm, and between 25 and 10 000 ppm of an acid acceptor consisting of a fatty acid amine of the formula :

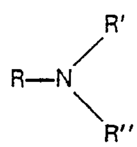

wherein R is $C_{12}$-$C_{24}$ alkyl or alkylene ; R' is hydrogen, lower alkyl, alkanol, 1,3-propylene diamine or an ethoxy group of the formula :

$$(C—C—O)_xH$$

wherein x is an integer between 2 and 5 ; and

R'' is R of R' ;

said acid acceptor having a molecular weight ≥ 180 with ≤ 5 % by weight volatiles at 180 °C as measured

by thermal evolution analysis ;
said concentration of acid acceptor being sufficient to neutralize said chloride residue and being at least 0.8 times the concentration of said anti-oxidant ;
said composition not containing talc.

10. A composition as defined in claim 9, wherein said polyolefin is an ethylene polymer, said chloride residue concentration is between 5 and 50 ppm, said anti-oxidant concentration is between 20 and 500 ppm, and said fatty acid amine concentration is between 25 and 1 000 ppm.

11. A composition as defined in claim 9, wherein said polyolefin resin is polypropylene or polybutene, said chloride residue concentration is between 10 and 500 ppm, said anti-oxidant concentration is between 200 and 5 000 ppm, and said fatty acid amine concentration is between 200 and 10 000 ppm.

12. A composition as defined in claim 9, wherein said fatty acid amine is present in an amount at least 5 times the amount of chloride residue present, preferably in a fatty acid amine to chloride residue ratio of greater than 10 to 1.

13. A composition as defined in claim 10, wherein said ethylene polymer is low pressure, low density, ethylene-butene-1-copolymer.

14. A composition as defined in any of claims 9 to 13, wherein said fatty acid amine is lauryl amine, stearyl amine, or behenyl amine, or combinations thereof ; diethanol lauryl amine, diethanol stearyl amine, diethanol behenyl amine, or combinations thereof ; diethanol tallow amine having between 14 and 18 carbon atoms or dimethyl soya amine having between 14 and 18 carbon atoms.

15. A composition as defined in any of claims 9 to 14, further including a slip agent and an antiblock agent.

**Patentansprüche**

1. Verfahren zum Extrudieren einer Zusammensetzung auf Basis eines filmbildenden Polyolefinharzes zu Folien, welche Zusammensetzung ein Ziegler-Natta-katalysierts Polyolefinharz von Folienqualität umfaßt, das einen Chlorid-Rückstand im Bereich zwischen 5 und 500 ppm und ein Antioxidationsmittel im Bereich zwischen 20 und 5 000 ppm enthält, welche Zusammensetzung anfällig ist für Gelschlieren und Nadelstreifen während der Bildung der Folie, gekennzeichnet durch :
Extrudieren der Zusammensetzung zu der Folie in Gegenwart von zwischen 25 und 10 000 ppm eines Säureakzeptors, bestehend aus einem Fettsäureamin der Formel

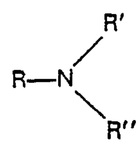

worin R $C_{12}$-$C_{24}$-Alkyl oder Alkylen ist ; R' Wasserstoff, Nieder-alkyl, Alkanol, 1,3-Propylendiamin oder eine Ethoxygruppe der Formel :

$$(C—C—O)_xH \text{ ist}$$

worin x eine ganze Zahl zwischen 2 und 5 ist ; und

R'' R oder R' ist ;

wobei der Säureakzeptor ein Molekulargewicht ⩾ 180 hat mit ⩽ 5 Gew.-% flüchtigen Bestandteilen bei 180 °C, gemessen durch thermische Evolutionsanalyse ;
wobei die Konzentration des Akzeptors ausreichend ist, um den Chlorid-Rückstand in der Zusammensetzung zu neutralisieren, und zumindest das 0,8fache der Konzentration des Antioxidationsmittel beträgt ;
wobei die Zusammensetzung kein Talkum enthält.

2. Verfahren, wie in Anspruch 1 definiert, worin das Polyolefin ein Ethylenpolymer ist, die Chlorid-Rückstand-Konzentration zwischen 5 und 50 ppm beträgt, die Antioxidationsmittel-Konzentration zwischen 20 und 500 ppm beträgt und die Fettsäureamin-Konzentration zwischen 25 und 1 000 ppm beträgt.

3. Verfahren, wie in Anspruch 1 definiert, worin das Polyolefinharz Polypropylen oder Polybuten ist, die Chlorid-Rückstand-Konzentration zwischen 10 und 500 ppm beträgt, die Antioxidationsmittel-Konzentration zwischen 200 und 5 000 ppm beträgt und die Fettsäureamin-Konzentration zwischen 200 und 10 000 ppm beträgt.

4. Verfahren, wie in Anspruch 1 definiert, worin das Fettsäureamin in einer Menge von zumindest dem 5fachen der vorhandenen Menge des Chlorid-Rückstands vorhanden ist, vorzugsweise in einem Fettsäureamin zu Chlorid-Rückstand-Verhältnis von größer als 10 zu 1.

5. Verfahren, wie in Anspruch 2 definiert, worin das Ethylenpolymer ein Niederdruck-Ethylen-Buten-1-Copolymer von niedriger Dichte ist.

6. Verfahren, wie in irgendeinem der Ansprüche 1 bis 5 definiert, worin des Fettsäureamin Laurylamin, Stearylamin, oder Behenylamin oder Kombinationen davon ; Diethanollaurylamin, Diethanolstearylamin, Diethanolbehenylamin oder Kombinationen davon ; Diethanoltalgamin mit zwischen 14 und 18 Kohlenstoffatomen oder Dimethylsojaamin mit zwischen 14 und 18 Kohlenstoffatomen ist.

7. Verfahren, wie in irgendeinem der Ansprüche 1 bis 6 definiert, worin die Zusammensetzung auf Polyolefinharz-Basis unter einer Extrusionstemperatur von mindestens 135 bis 344 °C (275 bis 650 °F) und einer Durchsatzzeit für die Zusammensetzung in der Extrudieranlage von etwa 0,2 bis 10 Minuten extrudiert wird.

8. Extrudierte Folie, im wesentlichen frei von Gelschlieren und Nadelstreifen, erhältlich nach dem Verfahren irgendeines der Ansprüche 1 bis 7.

9. Extrudierbare, filmbildende Zusammensetzung, umfassend ein Polyolefinharz, das einen Chlorid-Rückstand im Bereich zwischen 5 und 500 ppm, ein Antioxidationsmittel im Bereich zwischen 20 und 5 000 ppm und zwischen 25 und 10 000 ppm eines Säureakzeptors, bestehend aus einem Fettsäureamin der Formel :

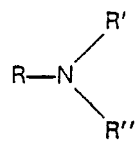

enthält, worin R $C_{12}$-$C_{24}$-Alkyl oder Alkylen ist ; R' Wasserstoff, Nieder-alkyl, Alkanol, 1,3-Propylendiamin oder eine Ethoxygruppe der Formel

$$(C—C—O)_xH \text{ ist,}$$

worin x eine ganze Zahl zwischen 2 und 5 ; und

R'' R oder R' ist ;

wobei der Säureakzeptor ein Molekulargewicht $\geq$ 180 hat mit $\leq$ 5 Gew.-% flüchtigen Bestandteilen bei 180 °C, gemessen durch thermische Evolutionsanalyse ;
wobei die Konzentration des Säureakzeptors ausreichend ist, um den Chlorid-Rückstand zu neutralisieren, und mindestens das 0,8fache der Konzentration des Antioxidationsmittels beträgt ; wobei die Zusammensetzung kein Talkum enthält.

10. Zusammensetzung, wie in Anspruch 9 definiert, worin das Polyolefin ein Ethylenpolymer ist, die Chlorid-Rückstand-Konzentration zwischen 5 und 50 ppm beträgt, die Antioxidationsmittel-Konzentration zwischen 20 und 500 ppm beträgt und die Fettsäureamin-Konzentration zwischen 25 und 1 000 ppm beträgt.

11. Zusammensetzung, wie in Anspruch 9 definiert, worin das Polyolefinharz Polypropylen oder Polybuten ist, die Chlorid-Rückstand-Konzentration zwischen 10 und 500 ppm beträgt, die Antioxidationsmittel-Konzentration zwischen 200 und 5 000 ppm beträgt und die Fettsäureamin-Konzentration zwischen 200 und 10 000 beträgt.

12. Zusammensetzung, wie in Anspruch 9 definiert, worin das Fettsäureamin in einer Menge von zumindest dem 5fachen der vorhandenen Menge des Chlorid-Rückstandes vorhanden ist, vorzugsweise in einem Fettsäureamin zu Chlorid-Rückstand-Verhältnis von größer als 10 zu 1.

13. Zusammensetzung, wie in Anspruch 10 definiert, worin das Ethylenpolymer ein Niederdruck-Ethylen-Buten-1-Copolymer von niederer Dichte ist.

14. Zusammensetzung, wie in irgendeinem der Ansprüche 9 bis 13 definiert, worin das Fettsäureamin Laurylamin, Stearylamin oder Behenylamin oder Kombinationen davon ; Diethanollaurylamin, Diethanolstearylamin, Diethanolbehenylamin oder Kombinationen davon ; Diethanoltalgamin mit zwischen 14 und 18 Kohlenstoffatomen oder Dimethylsojaamin mit zwischen 14 und 18 Kohlenstoffatomen ist.

15. Zusammensetzung, wie in irgendeinem der Ansprüche 9 bis 14 definiert, die außerdem ein Gleitmittel und ein Anti-Blockmittel enthält.

**Revendications**

1. Procédé d'extrusion en un film d'une composition à base de résine polyoléfinique filmogène, cette composition comprenant une résine polyoléfinique de qualité pour film obtenue avec un catalyseur Ziegler-Natta, qui contient un résidu de chlorure en quantité comprise dans l'intervalle de 5 à 500 ppm et un anti-oxydant en quantité comprise dans l'intervalle de 20 à 5 000 ppm, cette composition étant prédisposée à la production de traînées de gel et de fines rayures pendant la formation du film, caractérisé par :
l'extrusion de ladite composition en ledit film en présence d'une proportion de 25 à 10 000 ppm d'un

accepteur d'acide consistant en une amine d'acide gras de formule :

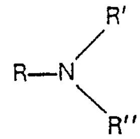

dans laquelle R est un groupe alkyle ou alkylène en $C_{12}$ à $C_{24}$ ; R' est l'hydrogène, un groupe alkyle inférieur, un alcanol, une 1,3-propylène-diamine ou un groupe éthoxy de formule :

$$(C—C—O)_xH$$

dans laquelle x est un nombre entier de 2 à 5 ; et

R" représente R ou R' ;

ledit accepteur d'acide ayant un poids moléculaire supérieur ou égal à 180, avec une quantité inférieure ou égale à 5 % en poids de matières volatiles à 180 °C, comme mesuré par analyse thermique par dégagement ;
ladite concentration dudit accepteur étant suffisante pour neutraliser le résidu de chlorure dans la composition et étant égale à au moins 0,8 fois la concentration dudit anti-oxydant ;
ladite composition ne contenant pas de talc.

2. Procédé suivant la revendication 1, dans lequel la polyoléfine est un polymère d'éthylène, la concentration du résidu de chlorure se situe entre 5 et 50 ppm, la concentration de l'anti-oxydant se situe entre 20 et 500 ppm, et la concentration de l'amine d'acide gras est comprise entre 25 et 1 000 ppm.

3. Procédé tel que défini dans la revendication 1, dans lequel la régine polyoléfinique est un polypropylène ou un polybutène, la concentration du résidu de chlorure se situe entre 10 et 500 ppm, la concentration de l'anti-oxydant se situe entre 200 et 5 000 ppm, et la concentration en amine d'acide gras va de 200 à 10 000 ppm.

4. Procédé tel que défini dans la revendication 1, dans lequel l'amine d'acide gras est présente en une quantité au moins égale à 5 fois la quantité présente de résidu de chlorure, avec de préférence un rapport de l'amine d'acide gras au résidu de chlorure supérieur à 10 : 1.

5. Procédé tel que défini dans la revendication 2, dans lequel le polymère d'éthylène est un copolymère éthylène-butène-1 à basse pression et basse densité.

6. Procédé tel que défini dans l'une quelconque des revendications 1 à 5, dans lequel l'amine d'acide gras est la lauryl-amine, la stéaryl-amine ou la béhényl-amine, ou leurs mélanges ; la diéthanol-lauryl-amine, la diéthanol-stéaryl-amine, la diéthanol-béhényl-amine, ou leurs mélanges ; une diéthanol-suif-amine ayant entre 14 et 18 atomes de carbone ou la diméthyl-soja-amine ayant entre 14 et 18 atomes de carbone.

7. Procédé tel que défini dans l'une quelconque des revendications 1 à 6, dans lequel la composition à base de résine polyoléfinique est extrudée à une température d'extrusion d'au moins 135 à 344 °C (275 à 650 °F) et avec une durée de passage de ladite composition dans l'appareillage d'extrusion d'environ 0,2 à 10 minutes.

8. Film extrudé essentiellement dépourvu de traînées de gel et de fines rayures, pouvant être obtenu conformément au procédé suivant l'une quelconque des revenciations 1 à 7.

9. Composition filmogène extrudable comprenant une résine polyoléfinique renfermant un résidu de chlorure dans l'intervalle de 5 à 500 ppm, un anti-oxydant dans l'intervalle de 20 à 5 000 ppm et une proportion de 25 à 10 000 ppm d'un accepteur d'acide consistant en une amine d'acide gras de formule :

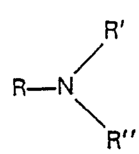

dans laquelle R est un groupe alkyle ou alkylène en $C_{12}$ à $C_{24}$ ; R' est l'hydrogène, un groupe alkyle inférieur, un alcanol, une 1,3-propylène-diamine ou un groupe éthoxy de formule :

$$(C—C—O)_xH$$

dans laquelle x est un nombre entier de 2 à 5 ; et

R" représente R ou R' ;

ledit accepteur d'acide ayant un poids moléculaire supérieur ou égal à 180, avec une quantité inférieure ou égale à 5 % en poids de matières volatiles à 180 °C, comme mesuré par analyse thermique par dégagement ;
ladite concentration dudit accepteur étant suffisante pour neutraliser le résidu de chlorure et étant égale au moins à 0,8 fois la concentration dudit anti-oxydant ;
ladite composition ne contenant pas de talc.

10. Composition telle que définie dans la revendication 9, dans laquelle ladite polyoléfine est un polymère d'éthylène, la concentration en résidu de chlorure va de 5 à 50 ppm, la concentration en anti-oxydant va de 20 à 500 ppm, et la concentration en amine d'acide gras va de 25 à 1 000 ppm.

11. Composition telle que définie dans la revendication 9, dans laquelle la résine polyoléfinique est un polypropylène ou un polybutène, la concentration en résidu de chlorure va de 10 à 500 ppm, la concentration en anti-oxydant va de 200 à 5 000 ppm, et la concentration en amine d'acide gras va de 200 à 10 000 ppm.

12. Composition telle que définie dans la revendication 9, dans laquelle l'amine d'acide gras est présente en une quantité d'au moins 5 fois la quantité présente de résidu de chlorure, avec de préférence un rapport de l'amine d'acide gras au résidu de chlorure supérieur à 10 : 1.

13. Composition telle que définie dans la revendication 10, dans laquelle le polymère d'éthylène est un copolymère éthylène-butène-1, à basse pression et basse densité.

14. Composition telle que définie dans l'une quelconque des revendications 9 à 13, dans laquelle l'amine d'acide gras est la lauryl-amine, la stéaryl-amine ou la béhényl-amine, ou leurs mélanges ; la diéthanol-lauryl-amine, la diéthanol-stéaryl-amine, la diéthanol-béhényl-amine, ou leurs mélanges ; une diéthanol-suif-amine ayant entre 14 et 18 atomes de carbone ou la diméthyl-soja-amine ayant entre 14 et 18 atomes de carbone.

15. Composition telle que définie dans l'une quelconque des revendications 9 à 14, comprenant en outre un agent favorisant le glissement et un agent anti-autoadhérence.